# EUROPEAN PATENT APPLICATION

(11) **EP 2 743 871 A1**
(43) Date of publication of application: **18.06.2014**
(21) Application number: 14152573.3
(22) Date of filing: 25.01.2014
(51) Int. Cl.: G06Q 10/06

(54) **Computer system supporting the automatic request of an intervention, after car accident, by mobile phone, and/or transmission of data related to the same accident, by using tablet PC, addressed to operators in charge of the intervention.**

(30) Priority: 04.12.2012 IT RM20120611; 25.01.2013 IT RM20130045
(71) Applicant: Cacciotti, Angelo, 00133 Rome (IT)
(72) Inventor: Cacciotti, Angelo, 00133 Rome (IT)
(74) Representative: Zizzari, Massimo

(57) **Abstract**

Computer system (100) and related process supporting automatic intervention requests, by a mobile phone (105, 106, 107), following a car accident and/or supporting transmission of data related to the same car accident, by tablet computers, towards proper operators, said system (100) characterized in that comprising:
- at least a central PC (116), placed at a national Head-quarter (102), providing acquisition of intervention requests and/or data transmission sent by registered users;
- at least a *server* (103), having a database providing acquisition, storage and retrieval of information saved or forwarded by one or more operators working in said operative Head-quarter (102);
- a set of mobile phones (105, 106, 107), each of them belonging to a registered user, said user placed somewhere in the national territory;
- a set of *tablet computers* (105a, 105b, 105c) placed on respective site of intervention, suitable to receive said intervention requests and to provide acquisition and transmission of data related to a car accident;
- a computer network, or information network (104), providing, in case of accident, direct communication between central *PC,* said *server* (103), mobile phones (105, 106, 107), and one or more *tablet computers* (105a, 105b, 105c), according to one or more following communication ways: sending a text message SMS, voice call, digital data transmission - i.e.: informative sheets, photos, identification data, etc.

## Description

The present invention concerns a computer system and related process supporting automatic requests, by a mobile phone, of intervention and/or data transmission and of communication, by a tablet or laptop computer, towards proper operators responsible for intervention and/or data transmission following a car accident.

These activities regard, in particular, the occurring of a car accident, somewhere in the national territory, and interventions where the re-establishment of safe and practicable road conditions are needed. In particular, when it is necessary an intervention of qualified operators equipped with specific equipment, suitable for aspiration and collection of liquids and other polluting materials eventually lost by vehicles, like in example lubricating oils, fuels parts of vehicles, and other types of debris. In particular cases, the intervention can involve the treatment of dangerous goods, hazard substances, and industrial wastes transported on the same vehicles.

All the local activities are coordinates and managed by an operative Head-quarter, that operates at a national level and that is mainly responsible to collect the intervention requests coming from all the territory, to define the risk factor associated to each event, to find the best qualified operators close to the place of the accident, and to manage all the necessary communication and support, in order to have an effective intervention returning normal, safe and practicable road conditions. The operative Head-quarter together with the operators distributed on the national territory constitute the so called road intervention network.

As known from the prior art, the problem of management and coordination of a road intervention network has already been considered, and some proper organizational structures have been proposed, able to activate local operators in consequence of an intervention call.

These intervention requests can arrive through SOS columns, usually installed on the highways, or through telephone calls directly arriving from Police officers, or again through specific operators working on roads and highways.

Each telephone call arrives to a national Head-quarter that is able to recognize and dispatch the requests to proper resources located on the territory.

Naturally, considering this kind of intervention, the time factor is particularly critic.

First, because a quick arrival of emergency vehicles on site can save the lives of people involved in the accidents, and then because the quick return to normal, safe and practicable road conditions, permits to minimize any inconvenience for users of the same road.

Another critical element is the proper research of the best qualified operators able to solve other particular problems given by specific risk factors, like i.e. the identification of the lost materials, the related treatment procedures, and the recruitment of the best experts for the same intervention all over national territory.

Italian patent IT 1389045, published on 1 June 2011, having the same under signed inventor, solves some technical issues related to rapidity, precision and intervention efficacy, proposing an integrated computer system, allowing real time coordination of different types of interventions in order to re-establish normal, safe and practicable road conditions.

The same system comprises databases that permit to immediately identify risk factors and consequently the best qualified operators able to manage the situation, like treatment of dangerous goods, on behalf of public safety and environmental protection.

The system also comprises integrated means for traceability of performed intervention actions, and for storage of technical and photographic documents inside the computer system in digital format, following the car accident, related to so called "crystallization" of the same car accident.

All these information is particularly useful for Insurance Companies consultants to reconstruct the accident event. It allows, indeed, to faster and easier verify responsibilities, an exact computation about vehicles involved damages amount, and about cleaning activities and maintenance performed by operators, with consequent evaluation of respective refunds and compensation concerning each side.

All the well known solutions have a certain number of drawbacks, in example:
- first of all, even if intervention request following a car accident may be transmitted as soon as possible, it is actually sent through intermediate means (SOS columns, Police officers, traffic manager operators);
- furthermore, said technical and photographic documents inside the computer system in digital format, related to so called "crystallization" of the same car accident, is sent by operators coming on site.

The present invention is based on fact that if intervention request towards the operative Head-quarter was sent directly by people involved in a car accident by means of a mobile phone, operators arrival time on site could be considerably reduced, allowing a faster and more efficient re-establishment interventions.

Furthermore, especially in case of small car accidents, acquisition of said technical and photographic documents, indispensable for following insurance refunds, could also be directly performed by people involved in the car accident by means of mobile phone and sent automatically to the operative Head-quarter. This would permit Insurance Company to faster manage their procedure and also a real point of view of the accident and of vehicle damages, compared to reports made by other people during following days.

And again, for a faster management of their procedure and also a real point of view of the accident and of vehicle damages, it is anyway possible to have a process of analogous acquisition managed by same operators, conveniently equipped with devices able to manage a situation in coordination with the operative Head-quarter, and to send immediately technical and photographic documents concerning the accident.

Therefore, the main objective of the present invention is to propose a computer system and related process supporting automatic intervention requests, by a mobile phone, following a car accident and/or supporting transmission of data related to the same car accident, by tablet computers, towards proper operators.

Another objective of the present invention is to allow automatic transmission of an intervention request towards the operative Head-quarter, directly by people involved in an accident, through a mobile phone, by means of automatic sending of a text message (SMS).

Another further objective is that intervention request towards the operative Head-quarter can be transmitted directly by people involved in the accident, through a voice call by means of their mobile phone, and that it is possible to start a direct conversation with an operator working in the Head-quarter.

Another objective is to provide acquisition of technical and photographic documents in digital format indispensable for following insurance refunds, directly performed by people involved in the car accident by means of their mobile phone and sent automatically to the operative Head-quarter.

A further objective is that intervention request can be immediately sent by said operative Head-quarter, to a Logistic Operative Centre - L.O.C., responsible of the territory, where operators in charge for intervention are located and intervention consists in re-establishment of safe and practicable road conditions through cleaning road platform.

Finally, another objective is that acquisition of technical and photographic documents in digital format, necessary for following insurance refunds, can be directly performed by operators arrived on site for intervention by means of their tablet computers and even be sent in real time to the operative Head-quarter saving all documents for further utilization.

Therefore, it is specific subject of the present invention a computer system and related process supporting automatic intervention requests, by a mobile phone, following a car accident and/or supporting transmission of data related to the same car accident, by tablet computers, towards proper operators, said system characterized in that comprising:
- at least a *central PC,* placed at a national Head-quarter, providing acquisition of intervention requests and/or data transmission sent by registered users;
- at least a *server,* having a database providing acquisition, storage and retrieval of information saved or forwarded by one or more operators working in said operative Head-quarter;
- a set of *mobile phones,* each of them belonging to a registered user, said user placed somewhere in the national territory;
- a set of *tablet computers* placed on respective site of intervention, suitable to receive said intervention requests and to provide acquisition and transmission of data related to a car accident;
- a computer network, or information network, providing, in case of accident, direct communication between central *PC,* said *server,* mobile phones, and one or more *tablet computers,* according to one or more following communication ways: sending an SMS text message, voice call, digital data transmission - i.e.: informative sheets, photos, identification data, etc.

The present invention will now be described for illustrative but not limitative purposes, according to its preferred embodiments, with particular reference to figures of the enclosed drawings, wherein:
figure 1 is a schematic view of a general architecture suitable for automatic intervention requests and/or data transmission, related to a car accident, by means of mobile phones, and/or for transmission of data concerning the same accident towards proper operators, through *tablet computers;*
figure 2 is a schematic view of an internet website suitable for user registration to said communication service;
figure 3 is a schematic view of an application screenshot for mobile phones working as user interface for intervention requests and/or data transmission, according to three possible communication ways: sending of a text message, voice call, digital data transmission;
figure 4 is a flow chart concerning a generic process of utilization for said communication service;
figure 5 is a flow chart related to a registration process to said communication service;

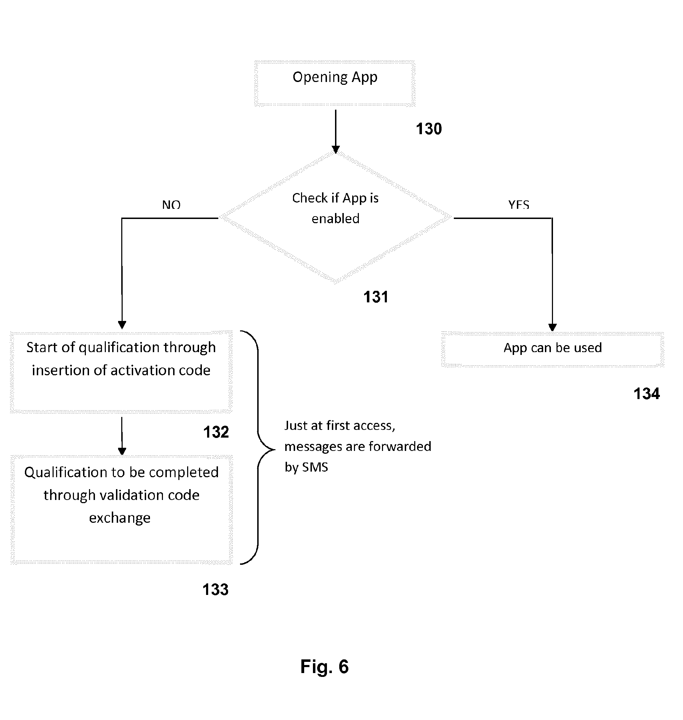

figure 6 is a flow chart concerning a qualification process of a mobile phone to said communication service;
figure 7 is a flow chart concerning a communication process according to the sending text message mode;
figure 8 is a flow chart concerning a communication process according to the voice call mode;
figure 9 is a flow chart concerning a communication process according to the digital data transmission mode - i.e.: informative sheets, photos, identification data, etc.
figure 10 is a schematic view of an application screenshot for *tablet computers* used by operators in charge of intervention for communication and/or data transmission following a car accident;
figure 11 is a schematic view of an application screenshot for *personal computer* used by operators working in the operative Head-quarter to prepare a procedure designed for intervention operators;
figure 12 is a schematic view of a screenshot related to the same application for *tablet computers* illustrated in figure 10 used by intervention operators to complete the same procedure prepared by the operative Head-quarter;
figure 13 is a schematic view of a screenshot related to the same application for *tablet computers* illustrated in figure 10 used by intervention operators to complete the same procedure with data related to damages suffered by vehicles in the accident;
figure 14 is a flow chart related to a generic communication support process, through *tablet computers,* with operators in charge of intervention following a car accident;
figure 15 is a flow chart related to the opening procedure phase in said process illustrated in figure 14;
figure 16 is a flow chart related to the taking on responsibility of procedure phase in said process illustrated in figure 14;
figure 17 is a flow chart related to the filling up of procedure phase in said process illustrated in figure 14;
figure 18 is a flow chart related to the sending of procedure phase in said process illustrated in figure 14.

It is here underlined that, in the following, only some of the many conceivable embodiments of the present invention will be described, and that they are just some particular examples that do not introduce any limitations, having the possibility to describe many other embodiments based on the disclosed technical solutions of the present invention.

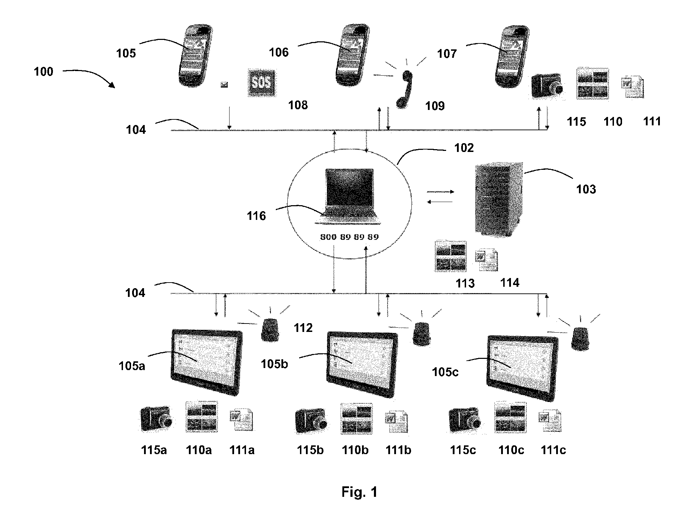

In figure 1 it is illustrated the general architecture of a computer system 100 for automatic intervention requests and/or transmission of data related to a car accident, by a mobile phone 105, 106, or 107, the same mobile phone belonging to a user placed somewhere in the national territory.

Users enabled to ask for an intervention and to forward data, are exclusively the ones previously registered, through a direct method of insertion of information on a website, with acquisition of an activation code, or through an indirect process if the same operations are performed by an intermediate operator working in a Insurance Company.

In figure 1 it is furthermore illustrated the general architecture of a computer system 100 for communication, by means of *tablet computers* 105a, 105b, 105c, with respective operators in charge of intervention and/or for data transmission following a car accident. The same operators are placed somewhere in the national territory.

The computer system 100 comprises, in particular, an operative Head-quarter 102 that receives all intervention requests coming from all the national territory.

The requests are received directly, through an Italian tool free phone number "800 89 89 89", that is active 24 hours per day, 365 days per year.

Requests are collected directly by a central *PC* 116 placed in said operative Head-quarter 102 linked through a computer network, or a communication network 104, to the same mobile phones 105, 106, 107, according to one or more following communication modes: sending a text message SMS, voice call, digital data transmission - i. e.: informative sheets, photos, identification data, etc.

Furthermore , the computer system 100 comprises at least a *server* 103, having a database providing acquisition, storage and retrieval of information saved or forwarded by one or more operators working in said operative Head-quarter 102.

The system 100 comprises also a set of *tablet computers* 105a, 105b, 105c, placed on respective site of intervention in the national territory, so that the operative Head-quarter 102 can immediately dispatch information and directives, in order to guide proper operators, placed on sites, or Logistic Operative Centre (L.O.C.), where the car accident occurred.

The service of automatic intervention, and/or of data transmission related to the car accident, is embedded through an applicative *software,* directly installed inside *tablet computers* available for operators.

The service of automatic intervention, and/or of data transmission related to the car accident, is embedded through an applicative *software,* called *App,* downloaded from internet and installed by user in his own mobile phone.

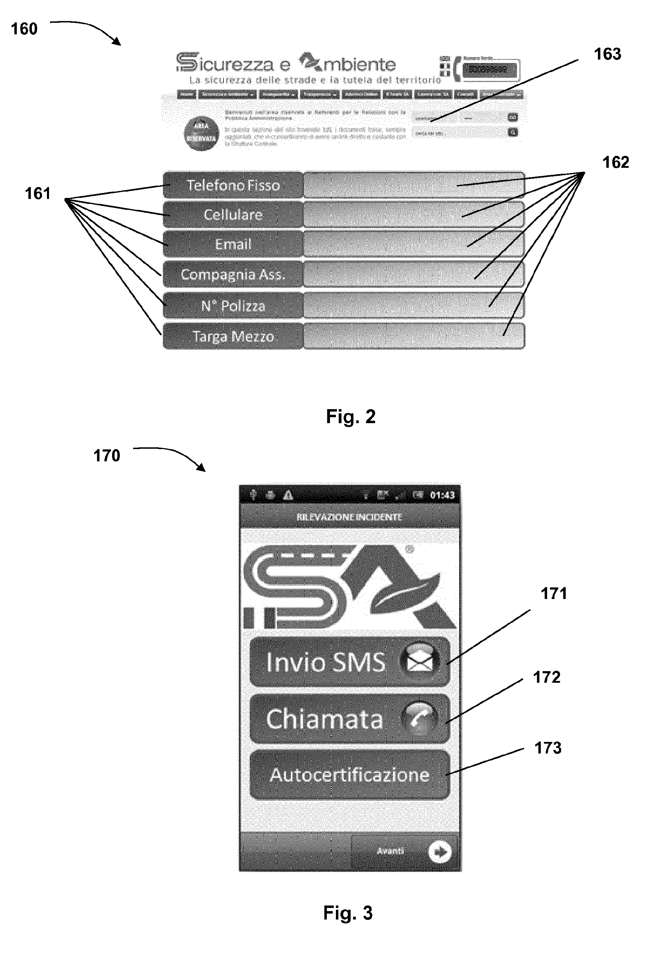

Subscription can be activated logging on a specific website 160, as illustrated in figure 2, in example *www.sicurezzaeambientespa.com,* and filling up fields 161 with identification data 162, in example: telephone number, mobile phone number, *e-mail* address, Insurance Company, policy number and vehicle number plate.

When the registration process is complete, an identification code univocally associated to user is automatically generated. It is the activation code of the App installed inside the mobile phone, and it also permits to associate directly user information to every request or to each automatic record generation - in example: accident sheet, operators intervention sheet, etc.

In figure 3 it is illustrated an example of a user interface screenshot 170 belonging to the App installed and activated on a mobile phone. We can see basically three different virtual buttons 171, 172, e 173 depending on which function user wants to activate in that situation: text message (button 171), voice call (button 172), digital data transmission - in example: informative sheets, photos, identification data, etc. (button 173).

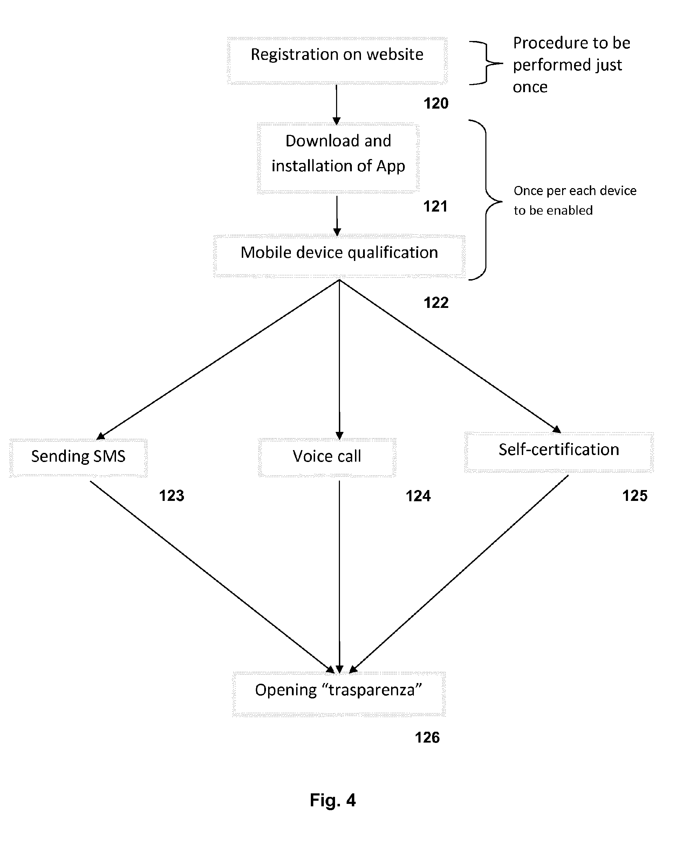

In figure 4 it is illustrated a flow chart related to a general process for utilization of said automatic intervention request service and/or service of data transmission related to a car accident.

This process consists in a preliminary registration of user 120, with the insertion of a set of data and the achievement of an activation code, then download and installation of an applicative software (App) 121 and qualification *of mobile device* 122 through insertion of the same activation code.

User registration has to be performed just once, while qualification of mobile device has to be performed once per each device, in case user owns many mobile phones. The process defines a communication between user and the operative Head-quarter according to three possible ways: sending of a text message SMS 123, voice call 124, digital data transmission 125. Said last option is also called "autocertificazione" meaning an operation provided by user consisting in communication of car accident data provided by himself, with informative sheets, photos, identification data of people and vehicles involved, etc.

Every communication with the operative Head-quarter causes the opening of a *"trasparenza"* 126, in other words the opening of an accident sheet following *Progetto Trasparenza®* of Sicurezza e Ambiente S.p.a. principles, according which an immediate collection of digital data and direct access to the same data for Insurance Companies, permits to assure the highest level of transparency, so permitting to decrease extremely possible fraud cases for lack and manipulation of data related to a car accident.

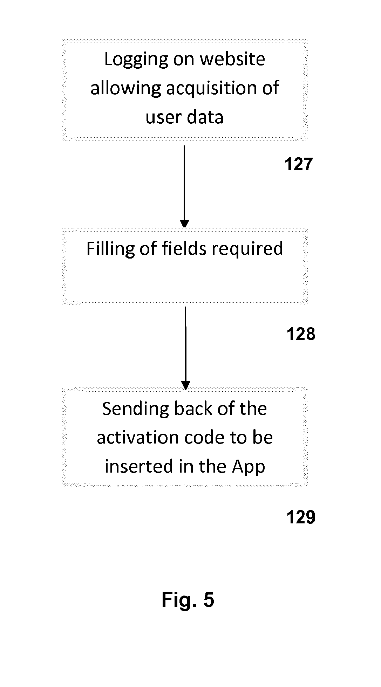

In figure 5 it is illustrated a flow chart related to a registration process provided by a user to said automatic intervention request service and/or transmission of data related to a car accident. The process consists in a logging to a dedicated 127, insertion of required fields 128 and a creation and return *of an activation code* 129.

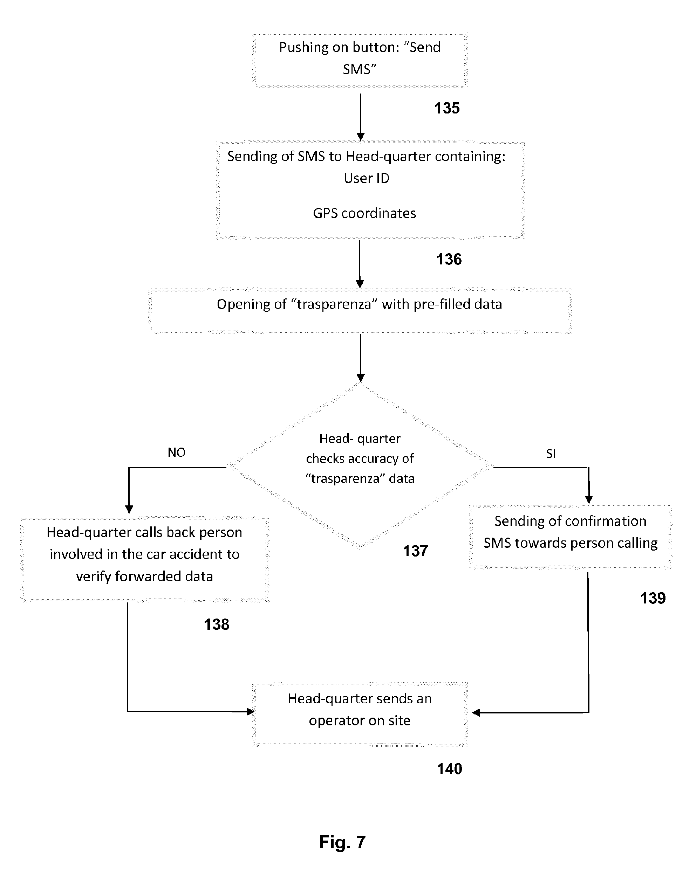

In figure 7 it is illustrated a flow chart related to a mobile device qualification, through insertion by user of said activation code 132, and following automatic exchange of a validation code 133 with the operative Head-quarter. This qualification is provided just at first log on, in further utilization of the *software* just a check 131 that App is already activated is provided and it can be used 134.

In figure 7 it is illustrated a flow chart related to a process of automatic intervention request provided by a user through sending a text message SMS. This function is activated pushing a virtual button *"send SMS"* 135 on user interface of the App installed in the mobile phone (figure 3, button 171). In correspondence to this action, a text message SMS is automatically generated and sent to the operative Head-quarter 136 with the following information: identification user code, geographic coordinates GPS obtained automatically by instruments installed in the mobile phone. When message is received a software placed in the operative Head-quarter starts an automatic pre-filling of an intervention request sheet also called *"trasparenza"* (transparency), based on user data related to respective identification code received. If received data are fitting with data stored, the operative Head-quarter sends a confirmation SMS to person calling 139 and activates an intervention of an operator 140 on site of accident, otherwise the operative Head-quarter calls back user to verify forwarded data 138 and eventually activates an operator intervention 140.

Therefore, this operative mode allows user to forward immediately an intervention request and also allows operative Head-quarter to send emergency services or proper operators on site, even in case user doesn't know exactly where he is.

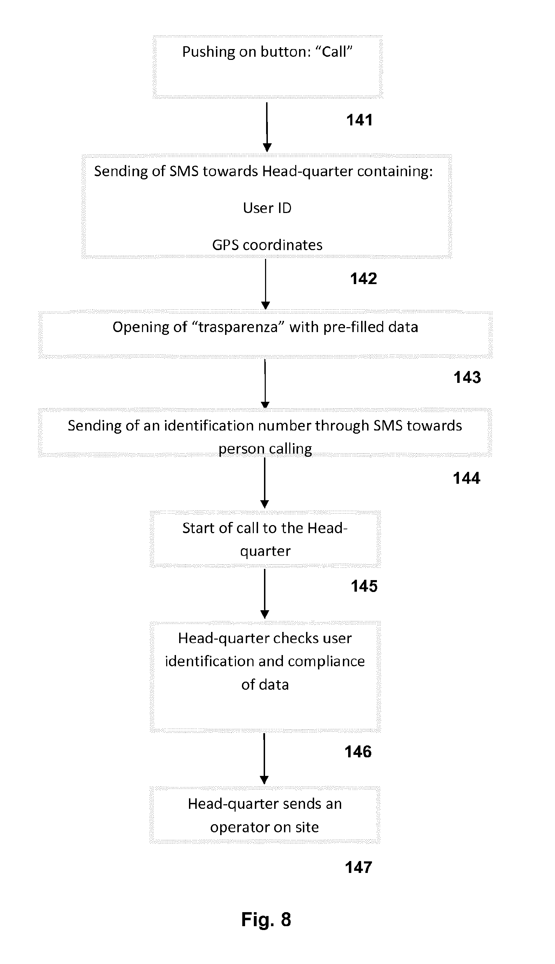

In figure 8 it is illustrated a flow chart related to a process of automatic intervention request by a user through a voice call. This mode is activated by pushing a virtual button *"Call"* 141 on user interface of the App installed in the mobile phone (figure 3, button 172). In correspondence to this action, again a text message SMS is automatically generated and sent to the operative Head-quarter 142 with the following information: identification user code, geographic coordinates GPS obtained automatically by instruments installed in the mobile phone. When message is received the same software placed in the operative Head-quarter starts an automatic pre-filling 143 of an intervention request sheet also called *"trasparenza"* (transparency), based on user data related to respective identification code received.

The operative Head-quarter sends an identification number to person calling through *SMS* 144 and starts a voice call with the user 145. The same operative Head-quarter verifies user identity and data accuracy 146, and eventually activates an operator intervention 147.

This operative mode allows user to forward an intervention request, being able to describe the situation orally so that the operative Head-quarter can establish nature and complexity of intervention, sending immediately emergency services or proper operators on site, even in case user doesn't know exactly where he is.

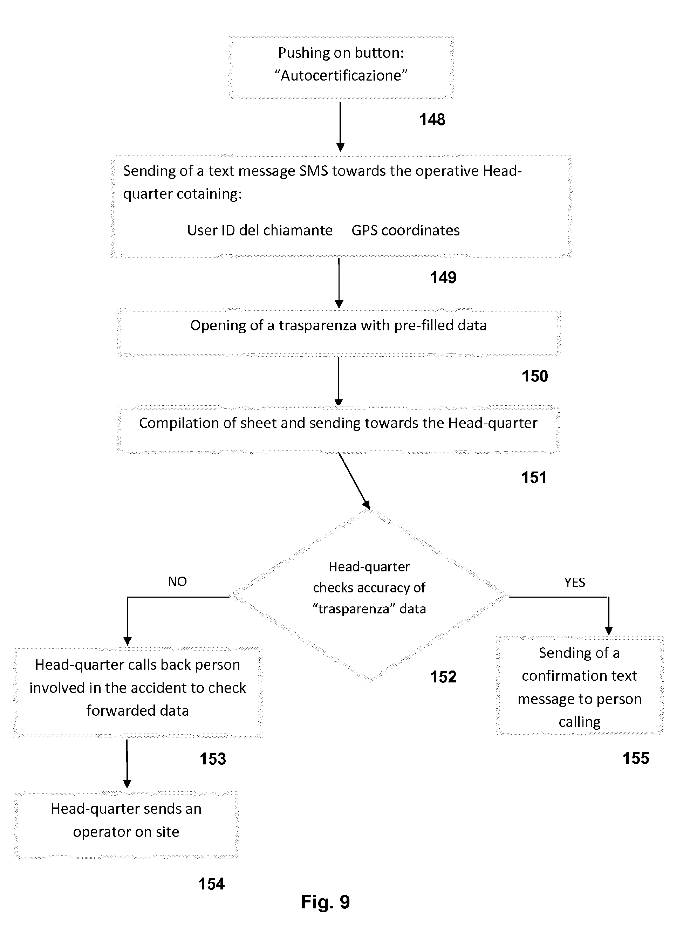

In figure 9 it is illustrated a flow chart related to a process of digital data transmission provided by a user. This mode is activated by pushing the virtual button *"Autocertificazione"* 148 on user interface of the App installed in the mobile phone (figure 3, button 173). In correspondence of this action, again a text message SMS is automatically generated and sent to the operative Head-quarter 149 with the same information: identification user code, geographic coordinates GPS obtained automatically by instruments installed in the mobile phone. When message is received the same software placed in the operative Head-quarter starts an automatic pre-filling 150 of an intervention request sheet also called *"trasparenza"* (transparency), based on user data related to respective identification code received.

Then, the user through the App interface of his mobile phone, fills up a set of sheets concerning the accident, weather, and road platform conditions, identification of people and vehicles involved with respective damages, supporting all with photographic documents obtained with the same camera installed in the mobile phone.

The operative Head-quarter checks accuracy of "trasparenza" data 152, and if so sends a confirmation SMS to person calling 155, otherwise operative Head-quarter calls back the user to verify data forwarded and eventually activates an operator intervention 154.

This operative mode allows user to forward an intervention request related to a car accident according to *Progetto Trasparenza*® of Sicurezza e Ambiente S.p.a. principles.

This permits a quick and obvious acquisition, by Insurance Companies, of all documents useful to evaluate responsibilities of people and the amount of damages suffered by people, things and vehicles involved in the accident.

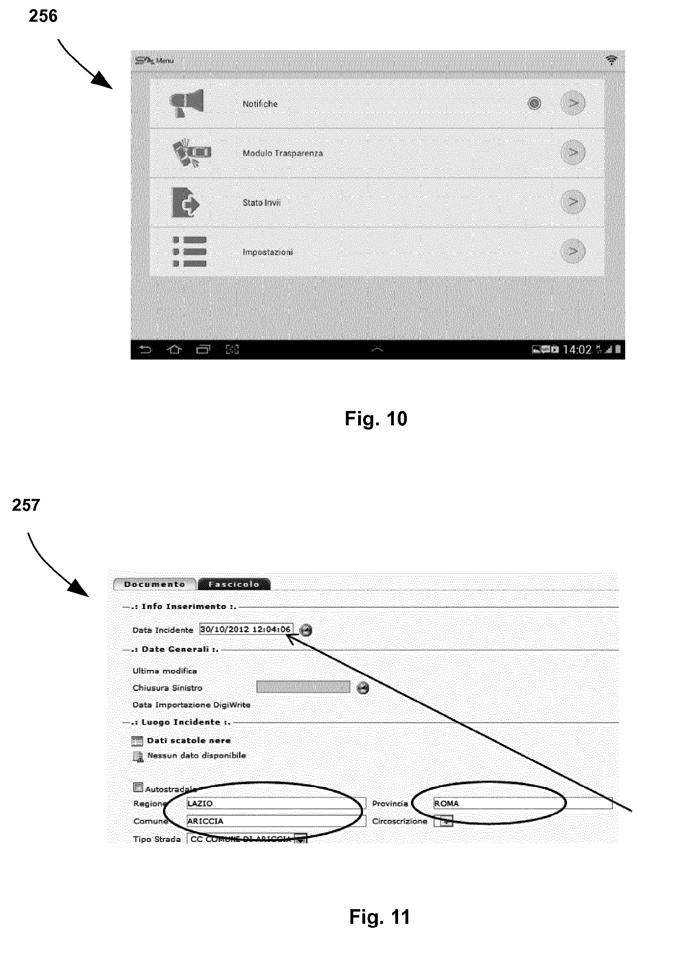

In figure 10 it is illustrated a screenshot 256 from the applicative *software* that is used by operators of Logistic Operative Centres to communicate with the operative Head-quarter.

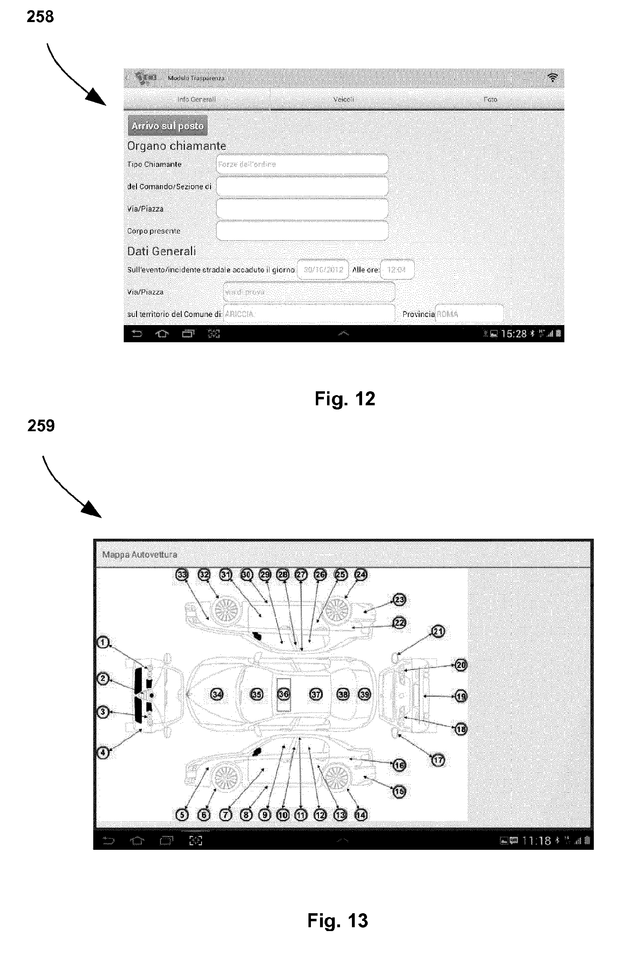

The applicative software permits the management of a procedure associated to an intervention. Referring to figure 11, the operative Head-quarter opens the procedure 257 specifying the place where the accident occurred and that the operator has to reach (district, region, municipality, address), and the *software* finds automatically the Logistic Operative Centre (CLO) responsible. The same *software* locates, based on the address indicated, the geographic coordinates (latitude, longitude) to reach, that are communicated to the Logistic Operative Centre too, in order to activate a guide through an integrated navigator. Once open the procedure, it is assigned to said procedure the progressive register number, and it is transmitted to the *tablet computers, of the* Logistic Operative Centre in charge. Once notice is sent (as illustrated in figure 12) on the user interface of the *tablet computers* belonging to the operator, appears a picture 258 with number of procedures to take in charge. According to the kind of intervention requested by the operative Head-quarter, a management section associated to the kind of taking on responsibility is open. In example, in case of a procedure associated to "Progetto Trasparenza", the *software* inserts automatically time of take on responsibility by an operator, and waits for the confirmation of arrival on site. As already explained, in case of necessity, an integrated navigator is activated, useful to guide the operator towards place to reach. At the moment of confirmation, the *software* updates the procedure with arrival time of the operator and respective geographic coordinates GPS.

Then, the operator inserts data related to the accident, in example: weather, road platform conditions, damages of vehicles involved, damages to people and things, witnesses, etc.

In a vehicle section the operator inserts data related to damages of vehicle involved in the accident, referring to: type of vehicle (car, motorcycle, motor-scooter, etc.), plate, insurance, brand, model, number of passengers, transport by tow truck, parked car, etc.

In a damaged elements section (figure 13) a screenshot of a vehicle appears like type chosen, and operator indicates individual parts and the amount of damages.

In a photo section, the operator uses the camera integrated in the *tablet computers* to automatically obtain all photographic documents, both about place where the accident occurred, and about damages of every vehicle involved, providing all with images of plates and of insurance tickets belonging to the same vehicles. Finally, the operator sends to the operative Head-quarter the procedure, after it has been filled and completed.

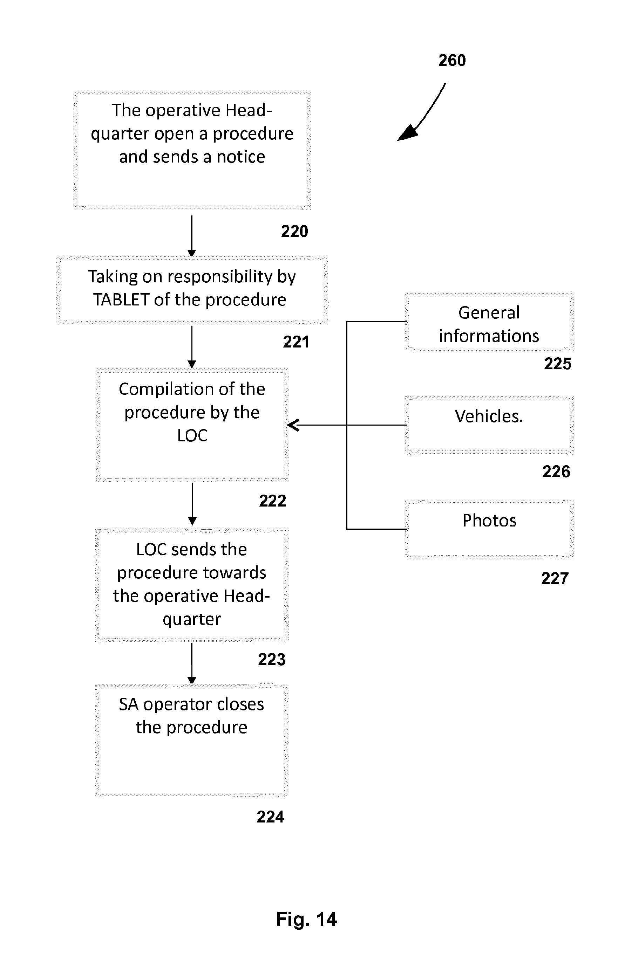

In figure 14 it is illustrated a general process 260 supporting communication between the operative Head-quarter and operators in charge of intervention, that comprises following phases: opening of procedure 220 by the operative Head-quarter and sending of a notice to the operator responsible for that territory; taking on responsibility 221 of the procedure by an operator responsible; filling up of procedure 222 by the same operator (belonging to a Logistic Operative Centre) with general information 225, vehicle involved 226 and photographic documents 227; sending of procedure 223 to the operator in the operative Head-quarter; closing of the procedure 224 by the operator in the operative Head-quarter.

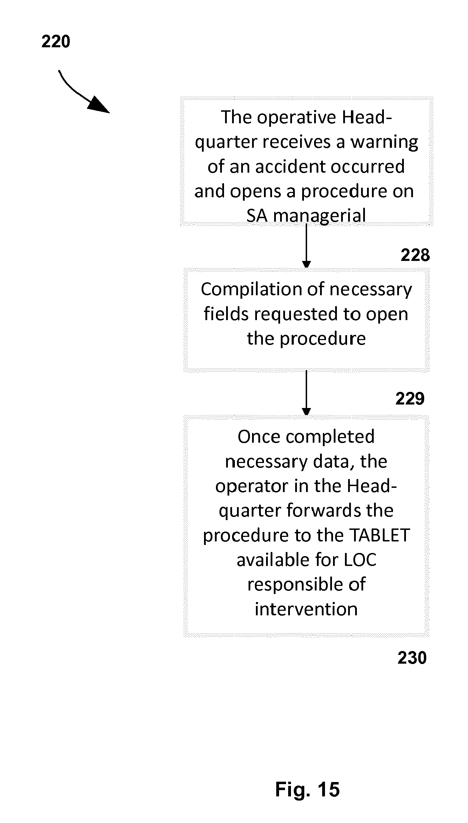

In figure 15 it is illustrated in detail said phase of opening of the procedure 220, that comprises following steps: the operative Head-quarter receives a warning about an accident and an operator opens a procedure 228; the same operator inserts a set of data 229, requested for opening the procedure; the same procedure is then sent to the *tablet PC* of a Logistic Operative Centre 230, responsible for intervention in that territory.

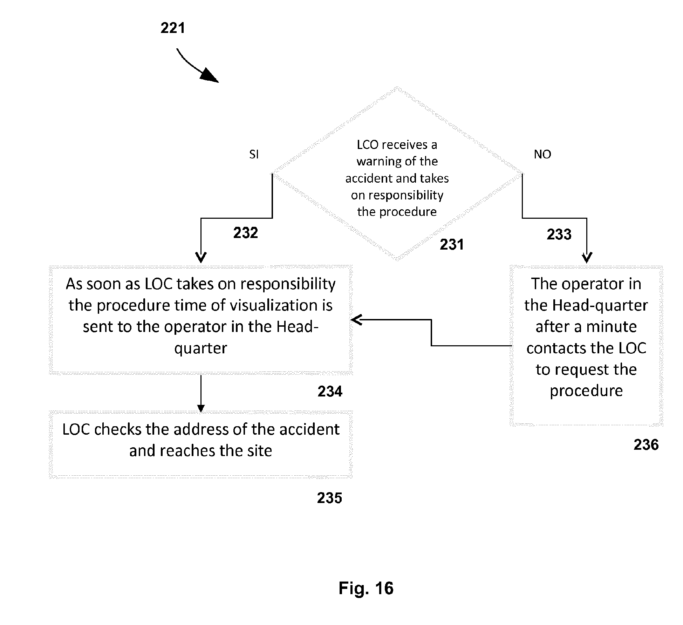

In figure 16 it is illustrated in detail said phase of taking on responsibility 221 of the procedure by operator, consisting in following steps: if operator in the Logistic Centre in charge takes on responsibility the procedure 232, then time corresponding is transmitted to the operative Head-quarter 234 and the operator reaches place indicated 235; otherwise, if operator in the Logistic Centre in charge doesn't take on responsibility the procedure 233, then after a minute the operative Head-quarter contacts the Logistic Operative in order to request intervention 236, and then time corresponding to the taking on responsibility is transmitted to the operative Head-quarter 234, operator reaches place indicated 235.

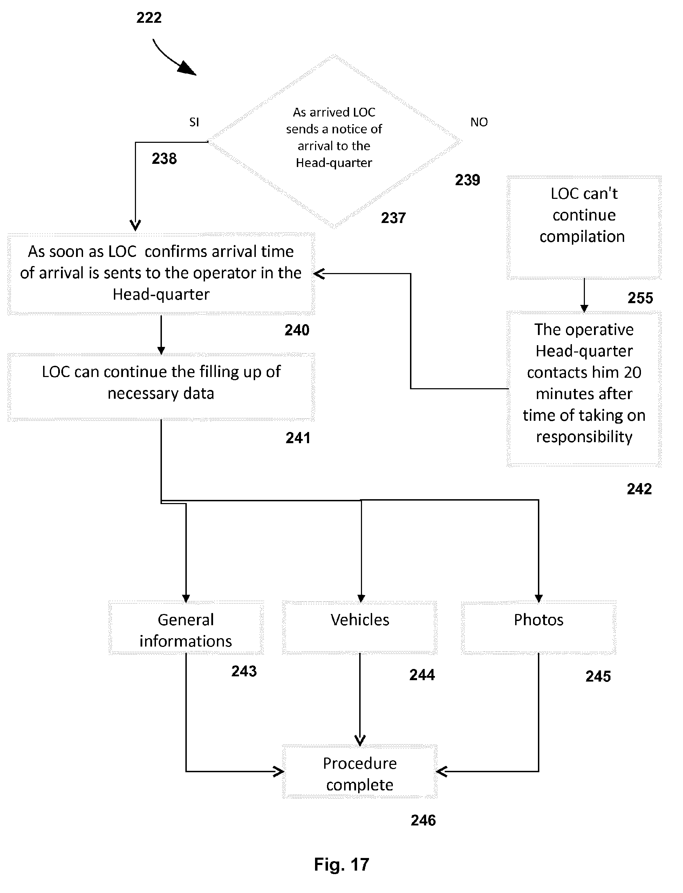

In figure 17 it is illustrated in detail said phase of filling up of the procedure 222 performed by the operator, consisting in following steps: if the operator in the Logistic Centre in charge sends to the operative Head-quarter a notice of arrival on site 238, then time corresponding is transmitted to the operative Head-quarter 240 and the operator can fill up all necessary data 241; otherwise, if the operator in the Logistic Centre in charge doesn't send to the operative Head-quarter a notice of arrival on site 239, then after 20 minutes from the taking on responsibility the operative Head-quarter contacts the Logistic Operative Centre in order to request arrival on site 242, and then time corresponding is transmitted to the operative Head-quarter 240 and operator can fill up all necessary data 241. Data is related to: general information 243, vehicles involved 244, and photographic documents 245. Compilation of the procedure with these data leads to completed procedure status 246.

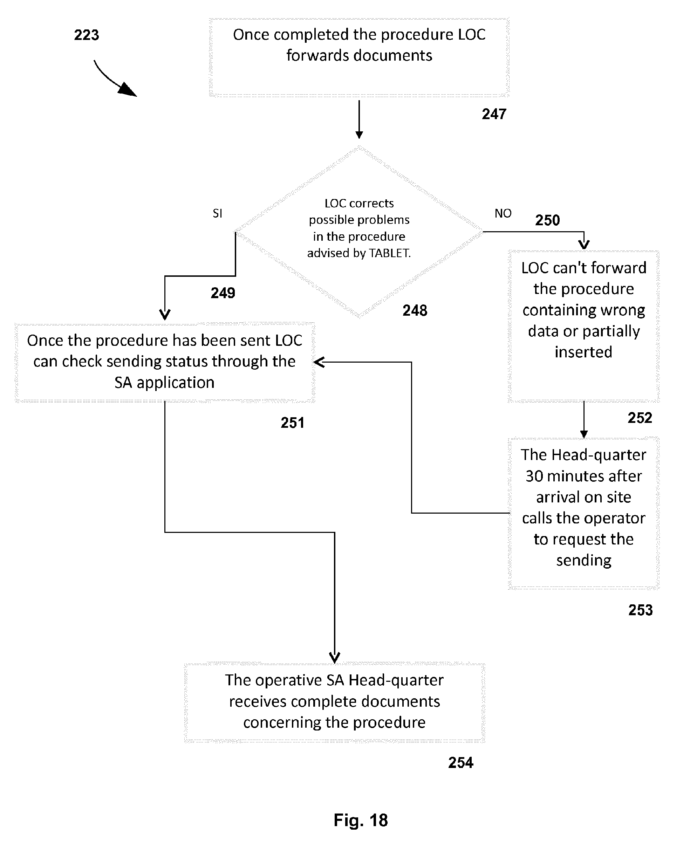

In figure 18 it is illustrated in detail said phase of sending of the procedure 223 performed by operator in the operative Head-quarter, consisting in following steps: operator prepares the procedure to be sent to the operative Head-quarter 247; if some data are wrong, then the operator in the Logistic Centre corrects wrong data 249 and checks sending status of the procedure 251; otherwise, if operator in the Logistic Centre doesn't corrects wrong data 250, then after 30 minutes from arrival on site the operative Head-quarter contacts the Logistic Centre in order to request said sending 253, and then operator checks sending of the procedure status 251. Finally, the operative Head-quarter receives complete documents about procedure 254.

Therefore, the above examples show that the present invention achieves all the proposed objectives.

In particular, it proposes a computer system and related process supporting automatic intervention request, by a mobile phone, following a car accident and/or supporting transmission of data related to the same car accident, by tablet computers, towards proper operators.

Then, the same invention provides an automatic transmission of an intervention request towards the operative Head-quarter, directly by people involved in an accident, through a mobile phone, by means of automatic sending of a text message (SMS).

Furthermore, intervention request towards the operative Head-quarter can be transmitted directly by people involved in the accident, through a voice call by means of their mobile phone, and that it is possible to start a direct conversation with an operator working in the Head-quarter

And again, the present invention provides acquisition of technical and photographic documents in digital format indispensable for following insurance refunds, directly performed by people involved in the car accident by means of their mobile phone and sent automatically to the operative Head-quarter.

Then, intervention request can be immediately sent by said operative Head-quarter, to a Logistic Operative Centre - L.O.C., responsible of the territory, where operators in charge for intervention are located and intervention consists in re-establishment of safe and practicable road conditions through cleaning road platform.

Finally, acquisition of technical and photographic documents in digital format indispensable for following insurance refunds, can be directly performed by operators arrived on site for intervention by means of their tablet computers and even be sent in real time to the operative Head-quarter saving all documents for further utilization.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. Computer system (100) and related process supporting automatic intervention request, by a mobile phone (105, 106, 107), following a car accident and/or supporting transmission of data related to the same car accident, by tablet computers, towards proper operators, said system (100) **characterized in that** comprising:
- at least a *central PC* (116), placed at a national Head-quarter (102), providing acquisition of intervention requests and/or data transmission sent by registered users;
- at least a *server* (103), having a database providing acquisition, storage and retrieval of information saved or forwarded by one or more operators working in said operative Head-quarter (102);
- a set of *mobile phones* (105, 106, 107), each of them belonging to a registered user, said user placed somewhere in the national territory;
- a set of *tablet computers* (105a, 105b, 105c) placed on respective site of intervention, suitable to receive said intervention requests and to provide acquisition and transmission of data related to a car accident;
- a computer network, or information network (104), providing, in case of accident, direct communication between central PC, said *server* (103), mobile phones (105, 106, 107), and one or more *tablet computers* (105a, 105b, 105c), according to one or more following communication ways: sending of a text message SMS, voice call, digital data transmission - i.e.: informative sheets, photos, identification data, etc.

2. Process supporting automatic intervention request, by a mobile phone (105, 106, 107), following a car accident and/or supporting transmission of data related to the same car accident, said process **characterized in that** comprising following preliminary steps:
- a preliminary registration of a user (120), with data entry and achievement of an activation code;
- *download and installation of an applicative software -* App - (121) inside the mobile phone belonging to said user;
- *qualification of mobile phone* (122) to intervention request service following a car accident and/or to data transmission service though insertion of said activation code,
so that said process defines a communication between user and an operative Head-quarter according to three possible modes: sending of a text message SMS (123), voice call (124), digital data transmission (125).

3. Process supporting automatic intervention request, by a mobile phone (105, 106, 107), following a car accident and/or supporting transmission of data related to the same car accident, according to previous claim 2, said process **characterized in that** comprising following preliminary steps:
- said mobile phone qualification (122) consists in insertion of said activation code (132) by user, integrated with an automatic exchange of a validation code (133) towards the operative Head-quarter; said qualification is provided just at first access, in following use of *software* only a check (131) is needed that the App has already been activated.

4. Process supporting automatic intervention request, by a mobile phone (105, 106, 107), following a car accident and/or supporting transmission of data related to the same car accident, according to previous claim 2, said process **characterized in that** comprising following further steps:
- pushing a virtual button *"send SMS"* (135) on the user interface of said App activates said communication mode: sending of a text message SMS (123);
- a text message SMS is automatically generated and is sent to the operative Head-quarter (136) with following information: user identification code; geographic coordinates GPS obtained through instruments installed inside the mobile phone;
- as soon as the text message is received, a *software* placed at the operative Head-quarter starts an automatic pre-filling of an intervention request sheet, also called *trasparenza* (transparency), based on user data associated to said identification code received;
- if data received are fitting stored data, the operative Head-quarter sends a confirmation SMS to person calling (139) and activate an operator intervention (140) on site, otherwise the operative Head-quarter calls back the user to verify sent data (138) and eventually activate an operator intervention (140),
in order to allow user to forward an intervention request immediately and to allow the operative Head-quarter to send emergency services and operators in charge for re-establishment of road normal conditions on site, even in case user doesn't know exactly where he is.

5. Process supporting automatic intervention request, by a mobile phone (105, 106, 107), following a car accident and/or supporting transmission of data related to the same car accident, according to previous claim 2, said process **characterized in that** comprising following further steps:
- pushing a virtual button *"Call"* (141) on the user interface of said App activates said communication mode: voice call (124);
- a text message SMS is automatically generated and is sent to the operative Head-quarter (142) with the following information: user identification code; geographic coordinates GPS obtained through instruments installed inside the mobile phone;
- as soon as the text message is received, a *software* placed at the operative Head-quarter starts an automatic pre-filling of an intervention request sheet, also called *trasparenza* (transparency), based on user data associated to said identification code received;
- the operative Head-quarter sends an identification number to person calling through SMS (144) and starts a voice call with user (145),
- the operative Head-quarter verify user identity and the accuracy of data (146), and eventually activate an operator intervention (147),
so that user can forward an intervention request, being able to explain the situation orally, and the operative Head-quarter can evaluate the matter of the problem and the complexity of intervention, sending on site proper emergency services and operators in charge for re-establishment of road normal conditions on site, even in case user doesn't know exactly where he is.

6. Process supporting automatic intervention request, by a mobile phone (105, 106, 107), following a car accident and/or supporting transmission of data related to the same car accident, according to previous claim 2, said process **characterized in that** comprising following further steps:
- pushing a virtual button *"Autocertificazione"* (148) on the user interface of said App activates said communication mode: digital data transmission (125);
- a text message *SMS* is automatically generated and is sent to the operative Head-quarter (142) with the following information: user identification code; geographic coordinates GPS obtained through instruments installed inside the mobile phone;
- as soon as the text message is received, a *software* placed at the operative Head-quarter starts an automatic pre-filling of an intervention request sheet, also called *trasparenza* (transparency), based on user data associated to said identification code received;
- user fills up a set of sheets through the App interface on his mobile phone (151), concerning the car accident, weather, road platform conditions, identification of people and vehicles involved and damages, providing photographic documents obtained using the same camera installed inside the mobile phone;
- the operative Head-quarter checks accuracy of "trasparenza" data (152), and if so sends a confirmation SMS to person calling (155), otherwise the operative Head-quarter calls back the user to verify sent data (153) and eventually activate an operator intervention (154),
so that user can forward all data related to a car accident, according to *Progetto Trasparenza®* of Sicurezza e Ambiente S.p.a. principles, in other words allowing quick and obvious acquisition, by Insurance Companies, of all documents useful to evaluate people responsibilities and calculate the amount of damages suffered by people, things and vehicles involved in the accident.

7. Process (260) supporting communication, through *tablet PC,* between operative Head-quarter and operators in charge of intervention following a car accident, said process (260) **characterized in that** comprising following steps:
- opening of a procedure (220) by a proper operator in the operative Head-quarter, and forwarding of notice to the operator in charge for the territory;
- taking on responsibility (221) of the procedure by proper operator;
- filling of the procedure (222) by the same operator, belonging to the Logistic Operative Centre - L.O.C., with following data: general information (225), vehicles involved (226) and photographic documents (227);
- forwarding of the procedure (223) from the operator towards the operative Head-quarter;
- closing of the procedure (224) by proper operator of the operative Head-quarter.

8. Process (260) supporting communication, through *tablet PC,* between operative Head-quarter and operators in charge of intervention, according to previous claim 7, in which said procedure opening phase (220) is **characterized in that** comprising following steps:
- the operative Head-quarter receives a car accident warning and an operator opens a procedure (228);
- the same operator entries a set of data (229), requested for the opening of the procedure;
- the same procedure is then forwarded to the *tablet computers* of a Logistic Operative Centre (230), responsible for intervention **in that** territory.

9. Process (260) supporting communication, through *tablet PC,* between operative Head-quarter and operators in charge of intervention, according to previous claim 7, in which said taking on responsibility of the procedure phase (221) by an operator is **characterized in that** comprising following steps:
- if the operator of the Logistic Centre in change takes on responsibility the procedure (232), then the corresponding time is transmitted to the operative Head-quarter (234) and the operator verify the site of accident and reaches it (235);
- otherwise, if the operator of the Logistic Centre in change doesn't take on responsibility the procedure (233), then after a minute the operative Head-quarter contacts the Logistic Operative Centre in order to request intervention (236), and then time corresponding the taking on responsibility is transmitted to the operative Head-quarter (234), the operator verify the site of accident and reaches it (235).

10. Process (260) supporting communication, through *tablet PC,* between operative Head-quarter and operators in charge of intervention, according to previous claim 7, in which said filling of procedure phase (222) by an operator is **characterized in that** comprising following steps:
- if the operator of the Logistic Centre in change notifies arrival on site to the Head-quarter (238), then the corresponding time is transmitted to the operative Head-quarter (240) and the operator can fill up requested data (241);
- otherwise, if the operator in the Logistic Centre in charge doesn't notifies arrival on site to the Head-quarter (239), then after 20 minutes from the taking on responsibility, the operative Head-quarter contacts the Logistic Centre in order to request arrival on site (242), and then time corresponding is transmitted to the operative Head-quarter (240) and the operator can fill up necessary data (241),
- compilation of the procedure with these data leads to completed procedure status (246); said data are related to: general information (243), vehicles involved (244) and photographic documents (245).

11. Process (260) supporting communication, through *tablet PC,* between operative Head-quarter and operators in charge of intervention, according to previous claim 7, in which said sending of procedure phase (123) by an operator in the operative Head-quarter is **characterized in that** comprising following steps:
- the operator prepares the procedure to send to the operative Head-quarter (247);
- if data are wrong, the operator of the Logistic Centre corrects wrong data (249) and checks sending of the procedure status (251);
- otherwise, if the operator of the Logistic Centre doesn't correct wrong data (250), then after 30 minutes from arrival on site the operative Head-quarter contacts the Logistic Operative Centre in order to request the sending (253), and then the operator checks sending of procedure status (251);
- finally, the operative Head-quarter receives all documents related to the procedure (254).
